# EUROPEAN PATENT SPECIFICATION

(11) **EP 2 157 489 B1**
(45) Date of publication and mention of the grant of the patent: **14.11.2012**
(21) Application number: 09275060.3
(22) Date of filing: 18.08.2009
(51) Int. Cl.: G05B 19/19, G05B 11/42, G05B 21/02, G05B 17/02, G05B 19/31

(54) **Motor Control System**
Motorsteuerungssystem
Système de commande de moteur

(30) Priority: 22.08.2008 JP 2008213605
(43) Date of publication of application: 24.02.2010
(73) Proprietor: Sanyo Denki Co., Ltd., Tokyo (JP)
(72) Inventor: Yuji, Ide, Toshima-ku Tokyo (JP)
(74) Representative: Wilson Gunn

(56) References cited:
- EP-A1- 1 313 207
- EP-A1- 1 376 287

## Description

### BACKGROUND OF THE INVENTION

### Field of the Invention

The present invention relates to a motor control system that includes a model control system and performs model following control.

### Description of the Related Art

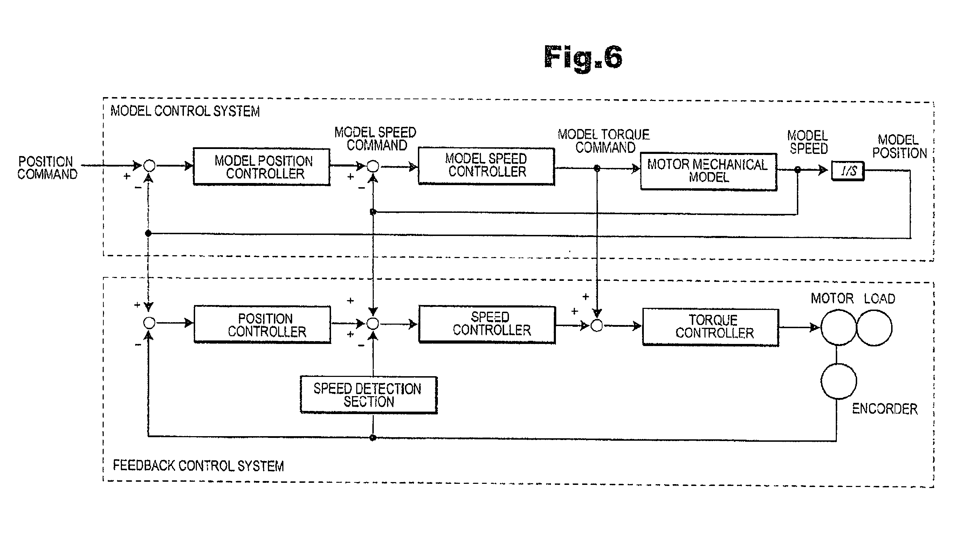

Model following control is known as a technique for high-speed positioning of a machine such as a chip mounter using a motor control system. In the model following control, a model control system is configured to simulate an actual feedback control system. The feedback control system is driven to follow the model control system. Fig. 6 shows the configuration of a motor control system adopting conventional model following control disclosed in Japanese Patent Application Publication No. 62-217304 (JP62-217304A). In this control system, the deviation between a position command and a model position is acquired and supplied to a model position controller to obtain a model speed command. The deviation between the model speed command and a model speed is then acquired and supplied to a model speed controller to obtain a model torque command. The model torque command is supplied to a motor mechanical model to calculate the model speed. The model speed is supplied to an integrator to calculate the model position. The difference between the model position and a motor position detected by an encoder is acquired and supplied to a position controller to output a speed command. The deviation between a value obtained by adding the speed command and the model speed and a value of detected speed is acquired and supplied to a speed controller to obtain a torque command. A value obtained by adding the torque command and the model torque command is supplied to a torque controller to drive a motor, controlling the torque of the motor. The motor mechanical model is represented as 1/{(JM + JL)S} where JM represents a motor inertia and JL represents a load inertia. According to the model following control thus configured, the command response characteristics and the disturbance suppression characteristics can be controlled independently from each other. The disturbance suppression characteristics are restricted by high-frequency resonance of the mechanical system and the like, and therefore cannot be improved more than a certain level. Meanwhile, the model response characteristics are not restricted by high-frequency resonance of the mechanical system and the like, and therefore can be improved. High-speed positioning of a machine can thus be achieved by improving the command response characteristics.

Compared to a conventional configuration comprising only a feedback control system, however, the model following control additionally requires a model control system. Therefore, the model following control requires a greater amount of computation and thus a faster CPU when implemented by means of software. In order to relieve burdens on the CPU, the control sampling rate of the model control system may be set to be lower than that of the feedback control system. If the sampling rate of the model control system is set to be lower than that of the feedback control system, however, an error due to the difference in control sampling rate may produce overshoot, extending the positioning settling time.

Japanese Patent Application Publication No. 2002-058270 (JP2002-058270A) discloses a motor control system that has been improved in this respect. In this motor control system, the sampling period for use in the model control system is set to be longer than that for use in the feedback control system, and an error due to the difference between the sampling rate of the model control system and that of the feedback control system is suppressed by compensation through computation.

EP 1 313 207 discloses a motor control system having a speed controller that outputs a torque command.

### SUMMAEY OF THE INVENTION

The conventional techniques as disclosed in JP2002-058270A may involve a great amount of computation, increasing the burden on the computation device.

An object of the present invention is to provide a motor control system that can execute model following control in which an influence of the difference between the sampling rate of a feedback control system and the sampling rate of a model control system is suppressed with a smaller amount of computation than ever, if the sampling rate of the model control system is set to be lower than that of the feedback control system.

A motor control system according to the present invention comprises a feedback control system and a model control system. The feedback control system includes a position sensor, a position controller, a speed controller, and a torque controller. The position sensor detects the position of a movable portion of a motor mounted on a machine base. The position controller outputs a speed command based on position information on the motor detected by the position sensor and a position command. The speed controller outputs a torque command based on the speed command and speed information obtained from the position sensor. The torque controller controls a torque of the motor based on the torque command.

In the present invention, the speed controller includes a low-pass filter having a transfer function corresponding to the delay in the sampling rate of the model control system, an integral control system, and a proportional control system. The integral control system includes a speed integrator that integrates a speed deviation between delayed speed information obtained by inputting the speed information to the low-pass filter and the speed command. The proportional control system outputs a command proportional to a difference between the speed command and the speed information on the motor. The speed controller further includes an addition section that adds an output of the integral control system and an output of the proportional control system. The speed controller also includes a speed proportional gain multiplication section that multiplies an output of the addition section by a speed proportional gain to obtain the torque command.

The model control system includes a model position controller, a model speed controller, a motor mechanical model, a model integrator, a first feedback section, and a second feedback section. The model position controller models the position controller to output a model speed command. The model speed controller models the speed controller to output a model torque command. The motor mechanical model models the motor using the model torque command as an input to output model speed information on the motor. The model integrator integrates the model speed information to output model position information on the motor. The first feedback section feeds back the model position information to the model position controller as a model position command for the feedback control system. The second feedback section feeds back the model speed information to the model speed controller as a model speed command for the feedback control system. The model control system is configured to add the model torque command to the torque command to be input to the torque controller, to give the model position command for the feedback control system to the position controller as the position command, and to add the model speed command for the feedback control system to the speed command to be input to the speed controller. The sampling rate of the model control system is lower than that of the feedback control system.

The speed controller of the feedback control system may include the integral control system discussed above, a proportional control system that outputs a command obtained by multiplying a difference between the speed command to which the model speed command has been added and the speed information on the motor by a speed proportional gain, and an addition section that adds an output of the integral control system and an output of the proportional control system.

In the present invention, the speed integrator integrates the speed deviation between the delay speed information obtained from the low-pass filter having a transfer function corresponding to the delay in the sampling rate of the model control system and the speed command. This configuration makes it possible to reduce a component that increases the residual quantity of the speed integrator and that is contained in the speed deviation between the speed command which has a delay corresponding to the delay of the model control system and the delay speed information obtained by the low-pass filter that delays speed information contained in a speed feedback. As a result, an influence of the difference between the sampling rate of the model control system and the sampling rate of the feedback control system can be suppressed with a simple configuration even if the sampling rate of the model control system is lowered. According to the present invention, model following control can thus be achieved with a reduced burden on the computation device such as a CPU which executes actual computation.

According to the present invention, the sampling rate of the model control system may be equal to or less than half the sampling rate of the feedback control system.

According to the present invention, it is possible to reduce a component that increases the residual quantity of the speed integrator and that is contained in the speed deviation between the speed command which has a delay corresponding to the delay of the model control system and the delay speed information obtained by the low-pass filter that delays speed information contained in a speed feedback. Thus, an influence of the difference between the sampling rate of the model control system and the sampling rate of the feedback control system can be advantageously suppressed simply by providing the low-pass filter even if the sampling rate of the model control system is lowered.

### BRIEF DESCRIPTION OF THE DRAWINGS

Fig. 1 is a block diagram showing the configuration of a motor control system according to the present invention.
Fig. 2 shows a specific configuration of an essential portion of a feedback control system.
Fig. 3 shows positioning simulation results in a configuration without a low-pass filter for a feedback to a speed integrator.
Fig. 4 shows positioning simulation results in a configuration with a low-pass filter for a feedback to the speed integrator.
Fig. 5 shows a different configuration of a speed controller that may be adopted in the present invention.
Fig. 6 shows the configuration of a conventional motor control system that performs model following control.

### DETAILED DESCRIPTION OF THE PREFERRED EMBODIMENTS

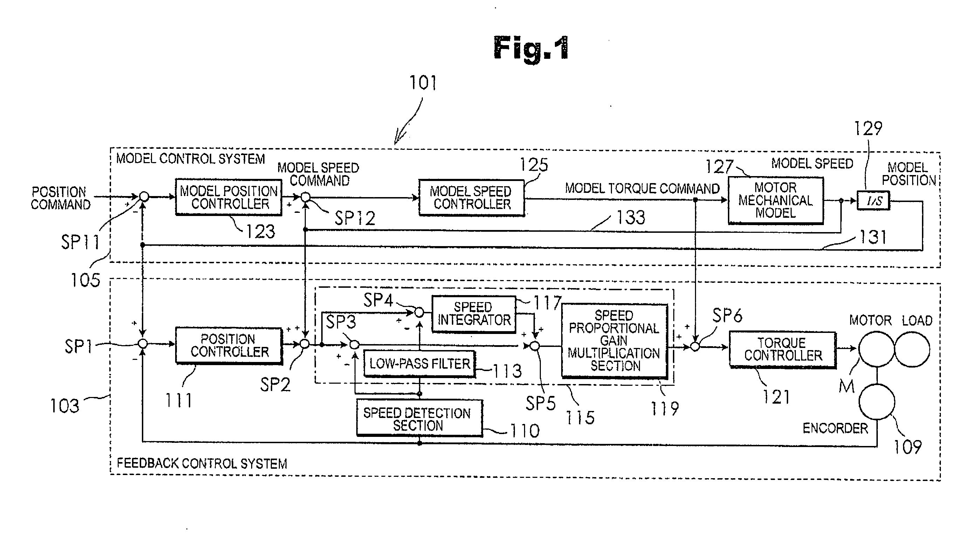

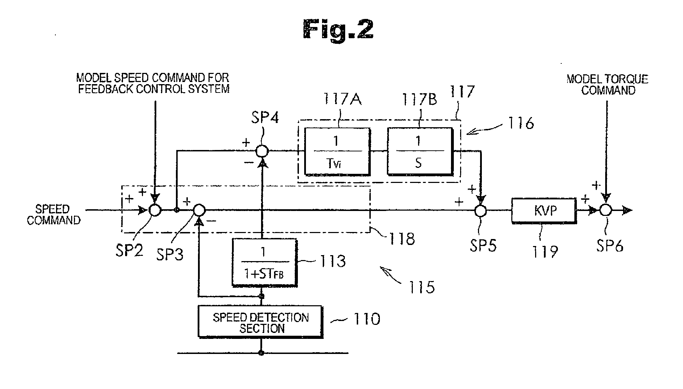

Hereinafter, embodiments of the present invention will be described in detail with reference to the drawings. Fig. 1 is a block diagram showing the configuration of a motor control system according to the present invention. Fig. 2 shows a specific configuration of an essential portion of a feedback control system 103. A motor control system 101 according to the embodiment includes a feedback control system 103 and a model control system 105. The feedback control system 103 includes a position sensor 109 that detects the rotational position of a shaft of a motor M and that is constituted by an encoder, a position controller 111, a speed detection section 110, a speed controller 115, and a torque controller 121. An output (position information) of the position sensor 109 is fed back to the position controller 111. Also, the output (position information) of the position sensor 109 is differentiated by a speed detection section 110, filtered by the low-pass filter 113, and fed back to the speed integrator 117. The position controller 111 receives the differential between the position information detected by the position sensor 109 and a position command from the model control system 105 as calculated by a subtraction section SP1. In the embodiment, the position command for an input to the position controller 111 is a model position command for the feedback control system output from the model control system 105. The position controller 111 outputs to the speed controller 115 a speed command based on the differential between the model position command for the feedback control system and the position information from the position sensor 109. An addition section SP2 calculates the sum of the speed command and a model speed command for the feedback control system output from the model control system 105. A subtraction section SP3 calculates the differential between the sum described above and the speed information obtained by differentiating the output of the position sensor 109 through the speed detection section 110.

As shown in Fig. 2, the speed controller 115 according to the embodiment includes the low-pass filter 113 having a transfer function corresponding to the delay in the sampling rate of the model control system 105, an integral control system 116 including a speed integrator 117, a proportional control system 118, and a speed proportional gain multiplication section 119. In the integral control system 116, the speed integrator 117 receives a command obtained by a subtraction section SP4 that subtracts delay speed information output from the low-pass filter 113 from the command obtained by the addition section SP2 that adds the speed command and the model speed command. The speed integrator 117 includes a speed gain multiplication section 117A and speed integration means 117B. The speed gain multiplication section 117A multiplies by an integral gain (1/Tvi) the command obtained by the subtraction section SP4 that subtracts the delay speed information output from the low-pass filter 113 from the command obtained by the addition section SP2 that adds the speed command and the model speed command. The speed integration means 117B integrates an output of the speed gain multiplication section 117A. In the proportional control system 118, the subtraction section SP3 calculates the difference between the speed command and the speed information on the motor M output from the speed detection section 110 to output a command proportional to the difference. The speed controller 115 further includes an addition section SP5 that adds an output of the speed integrator 117 (speed integration means 117B) and an output of the proportional control system 118. The speed controller 115 also includes a speed proportional gain multiplication section 119 that multiplies an output of the addition section SP5 by a speed proportional gain KVP to obtain a torque command.

The torque command is added to a model torque command by an addition section SP6, and input to the torque controller 121. The torque controller 121 controls a torque of the motor M based on the torque command to which the model torque command has been added.

As shown in Fig. 1, the model control system 105 includes a model position controller 123, a model speed controller 125, a motor mechanical model 127, a model integrator 129, a first subtraction section SP11, a second subtraction section SP12, a first feedback section 131, and a second feedback section 133. The motor mechanical model 127 models a motion of the motor M to output model speed information. The motor mechanical model 127 is represented as 1/{(JM + JL)S} where JM represents a motor inertia and JL represents a load inertia. The model integrator 129 integrates the model speed information to output model position information on the motor. The first feedback section 131 feeds back the model position information output from the model integrator 129 to the model position controller 123 via the first subtraction section SP11 as a "model position command for the feedback control system." The second feedback section 133 feeds back the model speed information to the model speed controller 125 via the second subtraction section SP12 as a "model speed command for the feedback control system." The model position controller 123 models the position controller 111 to output the model speed command. The model speed controller 125 models the speed controller 115 to output the model torque command. The model speed controller 125 is constituted by a proportional controller because no disturbance is applied to a model.

The model control system 105 gives the "model position command for the feedback control system," that is, the model position information output from the model integrator 129, to the position controller 111 via the first feedback section 131 as the position command. The model control system 105 also adds the "model speed command for the feedback control system" output from the motor mechanical model 127 to the speed command input from the position controller 111 to the speed controller 115 via the second feedback section 133 and the addition section SP2.

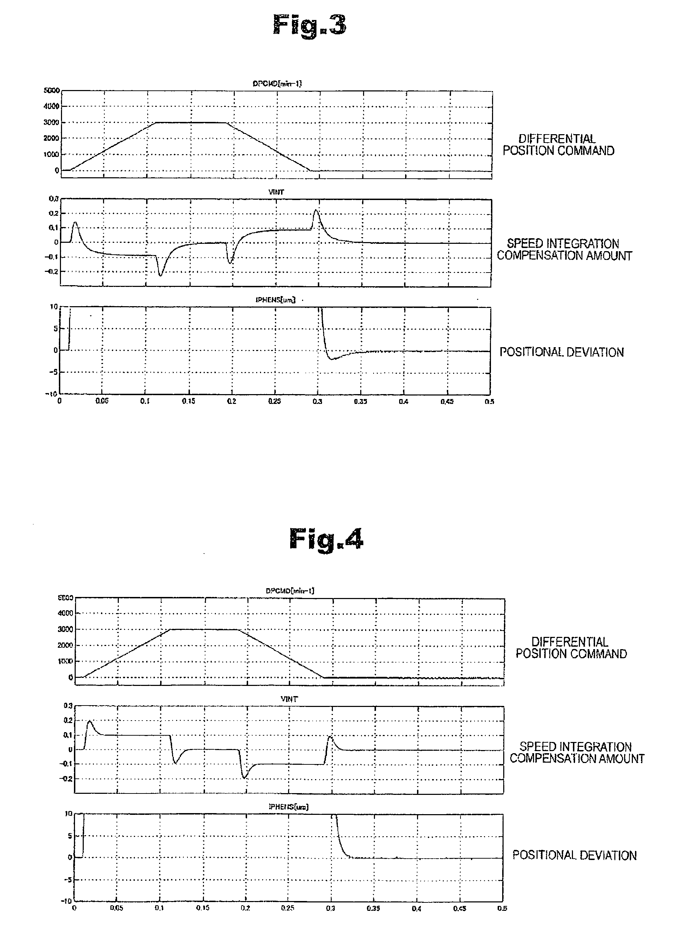

In the embodiment, the model control system 105 operates at a sampling period twice as long as that of the feedback control system 103 (at half the sampling rate of the feedback control system 103). An output of the low-pass filter 113 is used as a feedback input to the speed integrator 117 of the feedback control system 103. The low-pass filter 113 has a transfer function [1/ (1 + ST_{FB})] corresponding to the delay in the sampling rate of the model control system 105. In the embodiment, the speed integrator 117 integrates a speed deviation between the delay speed information obtained from the low-pass filter 113 which has a transfer function corresponding to the delay in the sampling rate of the model control system 105 and the speed command to which the model speed command has been added. This configuration makes it possible to reduce a component that increases the residual quantity of the speed integrator 117 and that is contained in the speed deviation between the speed command to which the model speed command has been added and which has a delay corresponding to the delay of the model control system 105 and the delay speed information obtained by the low-pass filter 113 that delays speed information contained in a speed feedback output from the speed detection section 110. As a result, an influence of the difference between the sampling rate of the model control system 105 and the sampling rate of the feedback control system can be suppressed simply by providing the low-pass filter 113 even if the sampling rate of the model control system 105 is lowered. That is, according to the present invention, the residual quantity of the speed integrator 117 is reduced to an appropriate level to suppress overshoot produced based on the residual quantity of the speed integrator 117, achieving high-speed positioning. Fig. 3 shows positioning simulation results in a configuration without the low-pass filter 113 for a feedback to the speed integrator 117. Fig. 4 shows positioning simulation results in a configuration with the low-pass filter 113 for a feedback to the speed integrator 117. In Figs. 3 and 4, the term "differential position command" refers to an output of the subtraction section SP1. The term "speed integration compensation amount" refers to an output of the speed integrator 117. The term "positional deviation" refers to the deviation of the position of the load to be driven by the motor M from its target position. As can be seen from the comparison between Figs. 3 and 4, providing the low-pass filter 113 brings the residual quantity of the speed integrator 117 to an appropriate level, suppressing overshoot. According to the embodiment, the burden on the CPU as a computation device can be reduced in the model following control. Even if the sampling rate of the model control system 105 is lower than that of the feedback control system 103, providing the low-pass filter 113 can suppress an increase in the residual quantity of the speed integrator 117 due to the difference in sampling rate.

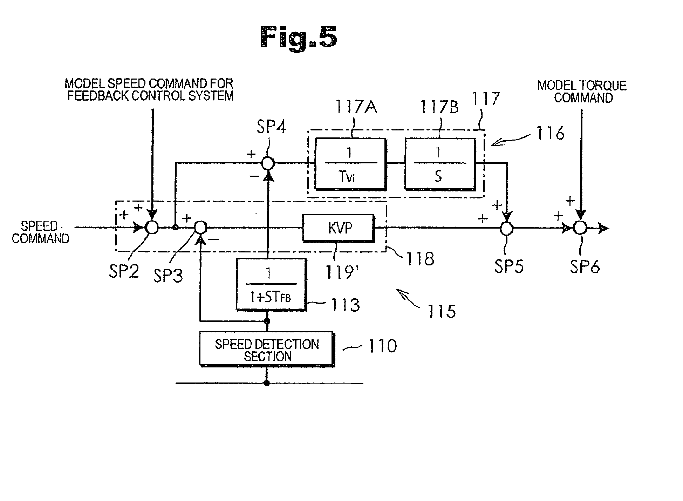

Fig. 5 shows another configuration example of a speed controller 115' of the feedback control system 103. The speed controller 115' uses the same integral control system as the integral control system 116 discussed above. The speed controller 115' adopts a proportional control system 118' configured to output a command obtained by multiplying by the speed proportional gain KVP a difference between the speed command to which the model speed command has been added and which is output from the addition section SP2 and the speed information on the motor M output from the speed detection section 110. The speed controller 115' also includes an addition section SP5 that adds an output of the integral control system 116 and an output of the proportional control system 118'. The same effect as in the embodiment described above can also be achieved in the configuration including the speed controller 115'.

The present invention is also applicable to vibration suppression control wherein the motor mechanical model 127 includes a vibration model.

While certain features of the invention have been described with reference to example embodiments, the description is not intended to be construed in a limiting sense. Various modifications of the example embodiments, as well as other embodiments of the invention, which are apparent to persons skilled in the art to which the invention pertains are deemed to lie within the scope of the invention.

## Claims

1. A motor control system (101) comprising:
a feedback control system (103) including:
a position sensor (109) that detects a position of a motor (M);
a position controller (111) that outputs a speed command based on position information on the position detected by the position sensor (109) and a position command;
a speed controller (115) that outputs a torque command based on the speed command and speed information obtained from the position sensor (109); and
a torque controller (121) that controls a torque of the motor (M) based on the torque command, and
a model control system (105) including:
a model position controller (123) that models the position controller (111) to output a model speed command;
a model speed controller (125) that models the speed controller (115) to output a model torque command;
a motor mechanical model (127) that models the motor (M) using the model torque command as an input, to output model speed information on the motor (M);
a model integrator (129) that integrates the model speed information to output model position information on the motor (M);
a first feedback section (131) that feeds back the model position information to the model position controller (123) as a model position command for the feedback control system; and
a second feedback section (132) that feeds back the model speed information to the model speed controller (125) as a model speed command for the feedback control system,
the model control system (105) being configured to add the model torque command to the torque command to be input to the torque controller (121), to give the model position command for the feedback control system to the position controller (111) as the position command, and to add the model speed command for the feedback control system to the speed command to be input to the speed controller (115), and
the model control system (105) having a sampling rate lower than that of the feedback control system (103), **characterized in that**:
the speed controller (115) includes:
a low-pass filter (113) having a transfer function corresponding to a delay in the sampling rate of the model control system (105);
an integral control system (116) including a speed integrator (117) that integrates a speed deviation between the speed command and delayed speed information obtained by inputting the speed information to the low-pass filter (113);
a proportional control system (118) that outputs a command proportional to a difference between the speed command and the speed information on the motor (M);
an addition section (SP2) that adds an output of the integral control system (116) and an output of the proportional control system (118); and
a speed proportional gain multiplication section (117A) that multiplies an output of the addition section (SP2) by a speed proportional gain (KVP) to obtain the torque command.

2. A motor control system (101) comprising:
a feedback control system (103) including:
a position sensor (109) that detects a position of a motor (M);
a position controller (111) that outputs a speed command based on position information on the position detected by the position sensor (109) and a position command;
a speed controller (115') that outputs a torque command based on the speed command and speed information obtained from the position sensor (109); and
a torque controller (121) that controls a torque of the motor (M) based on the torque command, and
a model control system (105) including:
a model position controller (123) that models the position controller (111) to output a model speed command;
a model speed controller (125) that models the speed controller (115) to output a model torque command;
a motor mechanical model (127) that models the motor (M) using the model torque command as an input, to output model speed information on the motor (M);
a model integrator (129) that integrates the model speed information to output model position information on the motor (M);
a first feedback section (131) that feeds back the model position information to the model position controller (123) as a model position command for the feedback control system; and
a second feedback section (132) that feeds back the model speed information to the model speed controller (125) as a model speed command for the feedback control system,
the model control system (105) being configured to add the model torque command to the torque command to be input to the torque controller (121), to give the model position command for the feedback control system to the position controller (111) as the position command, and to add the model speed command for the feedback control system to the speed command to be input to the speed controller (115'), and
the model control system (105) having a sampling rate lower than that of the feedback control system (103), **characterized in that**:
the speed controller (115') includes:
a low-pass filter (113) having a transfer function corresponding to a delay in a sampling rate of the model control system;
an integral control system (116) including a speed integrator (117) that integrates a speed deviation between delayed speed information obtained by inputting the speed information to the low-pass filter (113) and the speed command;
a proportional control system (118') that outputs a command obtained by multiplying a difference between the speed command and the speed information on the motor (M) by a speed proportional gain (KVP); and
an addition section (SP5) that adds an output of the integral control system (116) and an output of the proportional control system (118').

3. The motor control system (101) according to claim 1 or 2, wherein the sampling rate of the model control system (105) is equal to or less than half the sampling rate of the feedback control system (103).

## Patentansprüche

1. Motorsteuersystem (101) aufweisend:
ein Regelsystem (103) umfassend:
einen Positionssensor (109), welcher eine Position eines Motors (M) erfasst;
eine Positionssteuereinrichtung (111), welche basierend auf einer Positionsinformation über die Position, welche durch den Positionssensor (109) erfasst ist, und einem Positionssollwert einen Geschwindigkeitssollwert ausgibt;
eine Geschwindigkeitssteuereinrichtung (115), welche basierend auf dem Geschwindigkeitssollwert und einer Geschwindigkeitsinformation; die von dem Positionssensor (109) erhalten wird, einen Momentensollwert ausgibt; und
eine Momentensteuereinrichtung (121), welche basierend auf dem Momentensollwert ein Moment des Motors (M) steuert, und
ein Modellsteuersystem (105) umfassend:
eine Modellpositionssteuereinrichtung (123), welche die Positionssteuereinrichtung (111) modelliert, um einen Modellgeschwindigkeitssollwert auszugeben;
eine Modellgeschwindigkeitssteuereinrichtung (125), welche die Geschwindigkeitssteuereinrichtung (115) modelliert, um einen Modellmomentensollwert auszugeben;
ein Modell einer Motormechanik (127), welches unter Verwendung des Modellmomentensollwerts als eine Eingangsgröße den Motor (M) modelliert, um an den Motor (M) eine Modellgeschwindigkeitsinformation auszugeben;
einen Modellintegrator (129), welcher die Modellgeschwindigkeitsinformation integriert, um eine Modellpositionsinformation an den Motor (M) auszugeben;
einen ersten Rückkopplungsbereich (131), welcher die Modellpositionsinformation an die Modellpositionssteuereinrichtung (123) als einen Modellpositionssollwert für das Regelsystem zurückgibt; und
einen zweiten Rückkopplungsbereich (132), welcher die Modellgeschwindigkeitsinformation an die Modellgeschwindigkeitssteuereinrichtung (125) als einen Modellgeschwindigkeitssollwert für das Regelsystem zurückgibt;
wobei das Modellsteuersystem (105) eingerichtet ist, den Modellmomentensollwert zu dem Momentensollwert, welcher in die Momentensteuereinrichtung (121) einzugeben ist, zu addieren, den Modellpositionssollwert für das Regelsystem als den Positionssollwert an die Positionssteuereinrichtung (111) zu geben, und den Modellgeschwindigkeitssollwert für das Regelsystem zu dem Geschwindigkeitssollwert, welcher in die Geschwindigkeitssteuereinrichtung (115) einzugeben ist, zu addieren, und
wobei das Modellsteuersystem (105) eine Abtastrate aufweist, welche
geringer ist als diejenige des Regelsystems (103),
**dadurch gekennzeichnet, dass**
die Geschwindigkeitssteuereinrichtung (115) umfasst:
einen Tiefpassfilter (113), welcher eine Übertragungsfunktion entsprechend einer Verzögerung in der Abtastrate des Modellsteuersystems (105) aufweist;
ein Integralsteuersystem (116) umfassend einen Geschwindigkeitsintegrator (117), welcher eine Geschwindigkeitsabweichung zwischen dem Geschwindigkeitssollwert und einer verzögerten Geschwindigkeitsinformation, welche durch Eingeben der Geschwindigkeitsinformation in den Tiefpassfilter (113) erhalten wird, integriert;
ein Proportionalsteuersystem (118), welches einen Sollwert ausgibt, welcher proportional zu einer Differenz zwischen dem Geschwindigkeitssollwert und der Geschwindigkeitsinformation über den Motor (M) ist;
einen Additionsbereich (SP2), welcher einen Ausgang des Integralsteuersystems (116) und einen Ausgang des Proportionalsteuersystems (118) addiert; und
einen Geschwindigkeitsproportionalverstärkungsmultiplikationsbereich (117A), welcher einen Ausgang des Additionsbereichs (SP2) mit einer Geschwindigkeitsproportionalverstärkung (KVP) multipliziert, um den Momentensollwert zu erhalten.

2. Motorsteuersystem (101) aufweisend:
ein Regelsystem (103) umfassend:
einen Positionssensor (109), welcher eine Position eines Motors (M) erfasst;
eine Positionssteuereinrichtung (111), welche basierend auf einer Positionsinformation über die Position, welche durch den Positionssensor (109) erfasst ist, und einem Positionssollwert einen Geschwindigkeitssollwert ausgibt;
eine Geschwindigkeitssteuereinrichtung (115), welche basierend auf dem Geschwindigkeitssollwert und einer Geschwindigkeitsinformation, die von dem Positionssensor (109) erhalten wird, einen Momentensollwert ausgibt; und
eine Momentensteuereinrichtung (121), welche basierend auf dem Momentensollwert ein Moment des Motors (M) steuert, und
ein Modellsteuersystem (105) umfassend:
eine Modellpositionssteuereinrichtung (123), welche die Positionssteuereinrichtung (111) modelliert, um einen Modellgeschwindigkeitssollwert auszugeben;
eine Modellgeschwindigkeitssteuereinrichtung (125), welche die Geschwindigkeitssteuereinrichtung (115) modelliert, um einen Modellmomentensollwert auszugeben;
ein Modell einer Motormechanik (127), welches unter Verwendung des Modellmomentensollwerts als eine Eingangsgröße den Motor (M) modelliert, um an den Motor (M) eine Modellgeschwindigkeitsinformation auszugeben;
einen Modellintegrator (129), welcher die Modellgeschwindigkeitsinformation integriert, um eine Modellpositionsinformation an den Motor (M) auszugeben;
einen ersten Rückkopplungsbereich (131), welcher die Modellpositionsinformation an die Modellpositionssteuereinrichtung (123) als einen Modellpositionssollwert für das Regelsystem zurückgibt; und
einen zweiten Rückkopplungsbereich (132), welcher die Modellgeschwindigkeitsinformation an die Modellgeschwindigkeitssteuereinrichtung (125) als einen Modellgeschwindigkeitssollwert für das Regelsystem zurückgibt;
wobei das Modellsteuersystem (105) eingerichtet ist, den Modellmomentensollwert zu dem Momentensollwert, welcher in die Momentensteuereinrichtung (121) einzugeben ist, zu addieren, den Modellpositionssollwert für das Regelsystem als den Positionssollwert an die Positionssteuereinrichtung (111) zu geben, und den Modellgeschwindigkeitssollwert für das Regelsystem zu dem Geschwindigkeitssollwert, welcher in die Geschwindigkeitssteuereinrichtung (115') einzugeben ist, zu addieren, und
wobei das Modellsteuersystem (105) eine Abtastrate aufweist, welche geringer ist als diejenige des Regelsystems (103),
**dadurch gekennzeichnet, dass**
die Geschwindigkeitssteuereinrichtung (115') umfasst:
einen Tiefpassfilter (113), welcher eine Übertragungsfunktion entsprechend einer Verzögerung in der Abtastrate des Modellsteuersystems aufweist;
ein Integralsteuersystem (116) umfassend einen Geschwindigkeitsintegrator (117), welcher eine Geschwindigkeitsabweichung zwischen einer verzögerten Geschwindigkeitsinformation, welche durch Eingeben der Geschwindigkeitsinformation in den Tiefpassfilter (113) erhalten wird, und dem Geschwindigkeitssollwert integriert;
ein Proportionalsteuersystem (118'), welches einen Sollwert ausgibt, welcher durch Multiplizieren einer Differenz zwischen dem Geschwindigkeitssollwert und der Geschwindigkeitsinformation über den Motor (M) mit einer Geschwindigkeitsproportionalverstärkung (KVP) erhalten wird; und
einen Additionsbereich (SP5), welcher einen Ausgang des Integralsteuersystems (116) und einen Ausgang des Proportionalsteuersystems (118') addiert.

3. Motorsteuersystem (101) nach Anspruch 1 oder 2,
wobei die Abtastrate des Modellsteuersystems (105) gleich oder geringer ist als die Hälfte der Abtastrate des Regelsystems (103).

## Revendications

1. Système de commande de moteur (101) comprenant :
un système de commande de rétroaction (103) qui comprend :
un capteur de position (109) qui détecte une position d'un moteur (M) ;
un contrôleur de position (111) qui délivre en sortie une commande de vitesse basée sur des informations de position concernant la position détectée par le capteur de position (109) et une commande de position ;
un contrôleur de vitesse (115) qui délivre en sortie une commande de couple basée sur la commande de vitesse et sur les informations de vitesse obtenues à partir du capteur de position (109) ; et
un contrôleur de couple (121) qui commande un couple du moteur (M) sur la base de la commande de couple ; et
un système de commande de modèle (105) qui comprend :
un contrôleur de position de modèle (123) qui modélise le contrôleur de position (111) pour délivrer en sortie une commande de vitesse de modèle ;
un contrôleur de vitesse de modèle (125) qui modélise le contrôleur de vitesse (115) pour délivrer en sortie une commande de couple de modèle ;
un modèle mécanique de moteur (127) qui modélise le moteur (M) en utilisant la commande de couple de modèle en tant qu'entrée, pour délivrer en sortie des informations de vitesse de modèle concernant le moteur (M) ;
un intégrateur de modèle (129) qui intègre les informations de vitesse de modèle pour délivrer en sortie des informations de position de modèle concernant le moteur (M) ;
une première section de rétroaction (131) qui réinjecte les informations de position de modèle dans le contrôleur de position de modèle (123) en tant que commande de position de modèle pour le système de commande de rétroaction ; et
une seconde section de rétroaction (132) qui réinjecte les informations de vitesse de modèle dans le contrôleur de vitesse de modèle (125) en tant que commande de vitesse de modèle pour le système de commande de rétroaction ;
le système de commande de modèle (105) étant configuré pour ajouter la commande de couple de modèle à la commande de couple à entrer dans le contrôleur de couple (121), afin de fournir la commande de position de modèle pour le système de commande de rétroaction au contrôleur de position (111) en tant que commande de position, et d'ajouter la commande de vitesse de modèle pour le système de commande de rétroaction à la commande de vitesse à entrer dans le contrôleur de vitesse (115) ; et
le système de commande de modèle (105) présentant une cadence d'échantillonnage inférieure à celle du système de commande de rétroaction (103), **caractérisé en ce que** :
le contrôleur de vitesse (115) comprend :
un filtre passe-bas (113) présentant une fonction de transfert qui correspond à un retard dans la cadence d'échantillonnage du système de commande de modèle (105) ;
un système de commande intégrale (116) comprenant un intégrateur de vitesse (117) qui intègre un écart de vitesse entre la commande de vitesse et les informations de vitesse retardées obtenues en entrant les informations de vitesse dans le filtre passe-bas (113) ;
un système de commande proportionnelle (118) qui délivre en sortie une commande proportionnelle à la différence entre la commande de vitesse et les informations de vitesse concernant le moteur (M) ;
une section de sommation (SP2) qui somme une sortie du système de commande intégrale (116) et une sortie du système de commande proportionnelle (118) ; et
une section de multiplication de gain proportionnel de vitesse (117A) qui multiplie une sortie de la section de sommation (SP2) par un gain proportionnel de vitesse (KVP) afin d'obtenir la commande de couple.

2. Système de commande de moteur (101) comprenant :
un système de commande de rétroaction (103) qui comprend :
un capteur de position (109) qui détecte une position d'un moteur (M) ;
un contrôleur de position (111) qui délivre en sortie une commande de vitesse basée sur des informations de position concernant la position détectée par le capteur de position (109) et une commande de position ;
un contrôleur de vitesse (115') qui délivre en sortie une commande de couple basée sur la commande de vitesse et sur les informations de vitesse obtenues à partir du capteur de position (109) ; et
un contrôleur de couple (121) qui commande un couple du moteur (M) sur la base de la commande de couple ; et
un système de commande de modèle (105) qui comprend :
un contrôleur de position de modèle (123) qui modélise le contrôleur de position (111) pour délivrer en sortie une commande de vitesse de modèle ;
un contrôleur de vitesse de modèle (125) qui modélise le contrôleur de vitesse (115) pour délivrer en sortie une commande de couple de modèle ;
un modèle mécanique de moteur (127) qui modélise le moteur (M) en utilisant la commande de couple de modèle en tant qu'entrée, pour délivrer en sortie des informations de vitesse de modèle concernant le moteur (M) ;
un intégrateur de modèle (129) qui intègre les informations de vitesse de modèle pour délivrer en sortie des informations de position de modèle concernant le moteur (M) ;
une première section de rétroaction (131) qui réinjecte les informations de position de modèle dans le contrôleur de position de modèle (123) en tant que commande de position de modèle pour le système de commande de rétroaction ; et
une seconde section de rétroaction (132) qui réinjecte les informations de vitesse de modèle dans le contrôleur de vitesse de modèle (125) en tant que commande de vitesse de modèle pour le système de commande de rétroaction ;
le système de commande de modèle (105) étant configuré pour ajouter la commande de couple de modèle à la commande de couple à entrer dans le contrôleur de couple (121), afin de fournir la commande de position de modèle pour le système de commande de rétroaction au contrôleur de position (111) en tant que commande de position, et d'ajouter la commande de vitesse de modèle pour le système de commande de rétroaction à la commande de vitesse à entrer dans le contrôleur de vitesse (115') ; et
le système de commande de modèle (105) présentant une vitesse d'échantillonnage inférieure à celle du système de commande de rétroaction (103), **caractérisé en ce que** :
le contrôleur de vitesse (115') comprend :
un filtre passe-bas (113) présentant une fonction de transfert qui correspond à un retard dans une cadence d'échantillonnage du système de commande de modèle ;
un système de commande intégrale (116) comprenant un intégrateur de vitesse (117) qui intègre un écart de vitesse entre les informations de vitesse retardées obtenues en entrant les informations de vitesse dans le filtre passe-bas (113) et la commande de vitesse ;
un système de commande proportionnelle (118') qui délivre en sortie une commande obtenue en multipliant la différence entre la commande de vitesse et les informations de vitesse concernant le moteur (M) par un gain proportionnel de vitesse (KVP) ; et
une section de sommation (SP5) qui somme une sortie du système de commande intégrale (116) et une sortie du système de commande proportionnelle (118').

3. Système de commande de moteur (101) selon la revendication 1 ou 2, dans lequel la cadence d'échantillonnage du système de commande de modèle (105) est égale ou inférieure à la moitié de la cadence d'échantillonnage du système de commande de rétroaction (103).
